# EUROPEAN PATENT SPECIFICATION

(11) **EP 1 862 692 B1**
(45) Date of publication and mention of the grant of the patent: **14.09.2011**
(21) Application number: 07252222.0
(22) Date of filing: 31.05.2007
(51) Int. Cl.: F16D 65/18

(54) **Twin rotor disc brake**
Scheibenbremse mit Doppelrotor
Frein à disque à double rotor

(30) Priority: 02.06.2006 GB 0610960
(43) Date of publication of application: 05.12.2007
(73) Proprietor: Meritor Heavy Vehicle Braking Systems (UK) Limited, Cwmbran, Gwent NP44 3XU (GB)
(72) Inventor: Roberts, Paul, Newport NP20 5QU (GB); Mortali, Alessandro, 10126 Toiho (IT); Thomas, Paul Anthony, Newport NP26 3AY (GB); Shih, Shan, Troy, Michigan 48084 (US); Roche, Martin, Newport NP20 69N (GB); Conti, Corrado, 28100 Novara (IT); Harrup, Clive, Bromham, Bedfordshire MK43 8JA (GB); Bassi, Marco, 20026 Novate Milanese (IT); Hadley, Paul, Torfaen, South Wales NP44 7PJ (GB); Conti, Roberti, 21054 Olgiate Olona (VA) (IT); Jackson, Jonathan Leslie Christopher, Ross-on-Wye, Herefordshire HR9 6EA (GB); Ganaway, Gary, Troy, Michigan 48335 (US)
(74) Representative: Jones, John Bryn

(56) References cited:
- FR-A- 2 837 548
- GB-A- 986 400
- JP-A- 10 331 884
- US-A- 3 448 831
- US-A- 4 234 061

## Description

This invention relates to a twin rotor disc brake primarily but not exclusively for heavy commercial vehicles.

Disc brakes comprise a rotor having opposite annular faces to which brake pads are applied by a caliper. Hydraulic actuation is generally provided in passenger and light commercial vehicles, and the brake pads are applied to the rotor by opposed pistons of the caliper, or by a single piston caliper having a sliding yoke. Heavy commercial vehicles rely upon air actuation, which necessarily requires a relatively large air actuator.

Disc brakes are preferred over drum brakes because of their increased performance and ease of inspection and maintenance. However the rotor diameter is generally restricted by vehicle wheel diameter, and in some cases the swept area of the rotor may be insufficient for the weight of the vehicle. Accordingly twin rotor disc brakes have been developed, but in order to use a single caliper one or both of the rotors must slide axially relative to the axle, for example on splines. This arrangement is not wholly satisfactory because sliding splines are relatively expensive to manufacture, and have a tendency to stick due to corrosion or an accumulation of dirt and brake pad residues. Multiple callipers are not practicable. It would be desirable to provide a single caliper, twin rotor disc brake in which the rotors are relatively fixed, but the caliper has a single actuator.

A further problem of twin rotor disc brakes is that they are generally mounted at the axle ends, and in use at least partially shrouded by the wheel. Accordingly removal of the wheel is necessary for inspection and replacement of pads and/or rotors. Frequently pad wear is uneven, so that semi-worn pads are replaced at the same time as fully worn pads in order to avoid an intermediate inspection. It would be desirable to equalise pad wear, and to provide a means of actuation suitable for mid-axle location where appropriate. Such an arrangement would be especially useful in undriven rigid axles of e.g. semi-trailers, so that unnecessary wheel removal is avoided. Generally speaking wheel removal should be avoided if possible because of the well known problem of settling of freshly tightened wheel nuts, which can lead to loosening of the nuts and wheel shedding.

Known brake calipers used on a twin rotor brake are shown in GB986400 and US3448831. US4234061 shows a caliper according to the preamble of claim 1.

According to the invention there is provided a caliper for a fixed twin rotor disc brake according to claim 1.

Such arrangements combines the reliability of a fixed rotor installation with the simplicity of a single actuator operable on both yokes at the same time. This latter feature ensures equalisation of pad wear between pad pairs. The actuator preferably acts directly on each yoke, and in the preferred embodiment in a common plane.

Preferably the actuator floats with respect to the body, thus permitting the wear of the two pad pairs to be equalised.

In one embodiment the actuator is substantially midway between the rotors, and in this embodiment the yokes are preferably identical; in another embodiment the actuator is inboard of the rotor pair.

Preferably the yokes include oppositely facing 'U' shaped members defining an aperture therebetween, the actuator being provided in said aperture and operable to urge the members apart. The yokes may have mutually engaging sliding surfaces such that one yoke may be supported in part on the body via the other. Each yoke may include both a supporting portion for the other yoke, and a portion which is supported on the other yoke.

The actuator may be a cam pivotable about radius of the axis of rotation of the axle. The cam is preferably symmetrical and in the preferred embodiment is oval. Cams pivotable about the other axes are possible provided that the effect is to urge the members equally apart.

In place of a cam, the actuator may comprise a pneumatic jack or any other means capable of extension on operation thereof.

One feature of the invention will be apparent from the following description of preferred embodiments shown by way of example only in the accompanying drawings in which:
Fig. 1 is a plan schematic view of a first embodiment of the invention, and
Fig. 2 is a plan schematic view of a second embodiment of the invention.

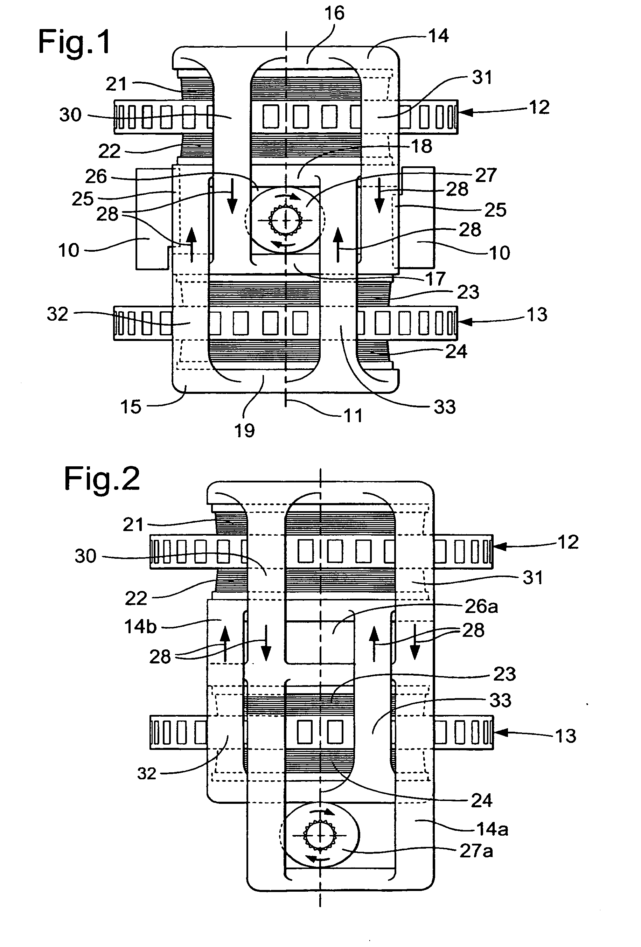

With reference to Fig.1, a caliper body 10 is mounted by any suitable means on a fixed element of a vehicle axle having an axis of rotation 11. Twin rotors 12,13 are attached to a rotating element of the axle, such as the hub by any suitable conventional method; the rotors may comprise a single component or unitary assembly. In the embodiment shown the rotors 12, 13 are ventilated, however ventilation of the rotors may not always be necessary.

Two overlapping yokes 14, 15 are provided, one each straddling a respective rotor 12,13. Each yoke has two depending arms 16-19, the four such arms being applied one each to the backplate of the four brake pads 21-24, as illustrated. The depending arms 16, 17 are connected by a pair of connecting legs 30, 31 to hold them a set distance apart. Similarly, depending arms 18, 19 are connected by connecting legs 32, 33. Legs 30, 31 and 32, 33 are offset relative to each other and move relative to each other in the same plane such that the yokes, when assembled only have the height of a single yoke; i.e. they are side-by-side and co-planar. This arrangement is possible by ensuring that depending arm 18 is positioned below the parallel connecting legs 30, 31 and depending arm 17 is positioned below the parallel connecting legs 32, 33. Alternatively, grooves or indentations may be provided on the depending arms 17,18 to slideably receive the connecting legs.

As will be apparent, the arrangement provides that the arms of each yoke are associated with one brake pad of each rotor; thus arms 16,17 are associated with pads 21,23, and arms 18,19 are associated with pads 22,24.

The yokes 14, 15 are slidable in the direction of the axis 11 with respect to each other and to the body 10. Suitable sliding arrangements are provided, such as key and keyway elements 25, but any suitable conventional method may be used, including cylindrical pins and corresponding apertures. As with all kinds of sliding caliper, the intent is that only relative movement in the direction of the rotational axis is permitted; relative arcuate movement is of course prevented in order to allow grounding of the braking torque via the caliper body.

The yokes 14,15 are generally rectangular in plan and overlap to define an aperture 26 centered between the rotors 12,13. An oval cam 27 is provided in the aperture 26 and is rotatable about the body 10 so as to increase the yoke overlap, or permit a reduction in yoke overlap. As illustrated the cam 27 is rotatable about an axis radial of the rotary axis 11, but a cam rotatable about an axis orthogonal to a radius would also serve.

In use rotation of the cam 27 is effected by any suitable actuation mechanism, including for example mechanical, electrical, hydraulic or pneumatic systems. Rotation in either direction causes the yokes to be urged respectively in the direction of arrows 28, thus applying the brake pads to the rotors. Yoke 14 applies the pads 21,23 in one axial direction, whereas yoke 15 applies the pads 22,24 in the other axial direction.

It will be appreciated that the pads associated with each yoke will wear equally, any uneven wear of one pad being immediately compensated by a greater braking effort being generated at the other pad.

The cam 27 may be fixed with respect to its rotational axis, or be allowed to float relative to the rotary axis. The latter is preferable to equalise braking effort exerted by each yoke.

Reverse rotation of the cam 27 allows the pads to push the yokes back to the released condition. Return springs are not usually necessary since a light rubbing contact of pad and disc is generally beneficial; however such spring(s) can be provided if required in any convenient location.

In the embodiment shown in Fig.1, the yokes 14,15 are identical and reversible. This reduces manufacturing and stockholding costs. Furthermore the yokes may be adapted to engage each other via sliding overlapping surfaces, so as to provide mutual support. It will be appreciated that the yoke pair of Fig.1 can be manufactured for assembly by slotting the outboard arm of one or both yokes. Alternatively, one or both yokes may be assembled from a number of subassemblies.

An alternative asymmetric form of the invention is illustrated in Fig.2. The method of operation is identical, but one of the yokes 14a is extended axially to overlap the other yoke 14b at both sides. The additional overlap allows the cam 27a to be located at the inboard side rather than in the centre. An advantage of this arrangement is that the rotors are closer together, and can in fact be much closer than illustrated if the central aperture 26a is minimised for unworn brake pads. This arrangement is especially suitable for an axle end location, and permits the wheel(s) to overlap both rotors whilst allowing the actuator to protrude at the inboard side where connection to the actuation system may be facilitated.

The invention is especially suitable for undriven rigid axles, such as those of semi-trailers. The twin rotor arrangement can be mounted inboard of the wheels and may even be provided at the centre of the axle if respective rotors provide the braking to respective one axle ends. The arrangement equalises pad wear and allows for rapid routine inspection whilst leaving the wheels in place.

It should be noted that in an alternative embodiment, the body 10 of Fig. 1 could extend to one or both of the depending arms 19, 16 with an abutment defined thereon to act as a load path for the drag load experienced by the depending arms 19, 16. This will advantageously reduce the torque produced at the position where the yokes 14,15 are mounted to the body 10.

It is envisaged that the brake pads 21,22,23,24 may be mounted to the yokes 14,15 in a number of ways, for example by mechanical fasteners, or by abutment with sidewalls of a recess in the yoke surface facing the rotor. Additionally the legs may be positioned sufficiently apart such that the brake pads can be inserted and removed therebetween for replacement.

## Claims

1. A caliper for a fixed twin rotor disc brake said caliper comprising a relatively fixed body (10),
a first yoke (14) moveable axially with respect to the body, said first yoke having a first depending arm (16) and a second depending arm (17) comprising formations for receiving a first pair of brake pads (21, 23) for application to the rotor sides, the first yoke further comprising a first connecting leg (30) and a second connecting leg (31) connecting the depending arms (16, 17),
said caliper further comprising a second yoke (15) moveable axially with respect to the body (10) said second yoke having a first depending arm (18) and a second depending arm (19) comprising formations for receiving a second pair of brake pads (22, 24) for application to the rotor sides, the second yoke further comprising a first connecting leg (32) and a second connecting leg (33) connecting the depending arms (18, 19),
wherein the first yoke (14) is operable to urge the first pair of brake pads in a first axial direction, the second yoke (15) is operable to move the second pair of brake pads in a second, opposite axial direction, and the first leg and the second leg move in substantially the same plane,
**characterised in that**:
said yokes (14, 15) overlap such that the first depending arm (18) of the second yoke is positioned below the connecting legs (30, 31) of the first yoke and the second depending arm (17) of the first yoke is positioned below the connecting legs (32, 33) of the second yoke.

2. A caliper according to claim 1 wherein said actuator (27) acts directly on each yoke.

3. A caliper according to claim 2 wherein said actuator (27) acts on each yoke in a common plane.

4. A caliper according to any preceding claim wherein said actuator (27) floats with respect to the body.

5. A caliper according to any preceding claim wherein said actuator (27) is inboard the rotor pair.

6. A caliper according to any preceding claim wherein said yokes include 'U' shaped members defining an aperture therebetween, the actuator being provided in said aperture and operable to urge the members apart.

7. A caliper according to claim 6 wherein said actuator (27) is a cam pivotable about an axis perpendicular to the first and second axial directions.

8. A caliper according to any preceding claim wherein the formations for receiving the first pair of brake pads and the formations for receiving the second pair of brake pads are fitted on a first side of the actuator (27) in the first axial direction.

9. A caliper according to any preceding claim further comprising a brake pad mounted in at least one of the formations for receiving a pair of brake pads.

10. A twin rotor disc brake comprising twin rotors having a relatively fixed axial location and a caliper according to any preceding claim straddling said rotors.

## Patentansprüche

1. Sattel für eine Scheibenbremse mit festgelegter Doppelscheibe, wobei der Sattel Folgendes umfasst:
einen relativ festgelegten Körper (10),
ein erstes Joch (14), das bezüglich des Körpers axial beweglich ist, wobei das erste Joch einen ersten herabhängenden Arm (16) und einen zweiten herabhängenden Arm (17) mit Ausbildungen zur Aufnahme eines ersten Paars von Bremsbacken (21, 23) zum Anlegen an die Scheibenseiten umfasst, wobei das erste Joch weiterhin einen ersten Verbindungsschenkel (30) und einen zweiten Verbindungsschenkel (31) zur Verbindung der herabhängenden Arme (16, 17) umfasst,
wobei der Sattel weiterhin ein zweites Joch (15) umfasst, das bezüglich des Körpers (10) axial beweglich ist, wobei das zweite Joch einen ersten herabhängenden Arm (18) und einen zweiten herabhängenden Arm (19) mit Ausbildungen zur Aufnahme eines zweiten Paars von Bremsbacken (22, 24) zum Anlegen an die Scheibenseiten umfasst, wobei das zweite Joch weiterhin einen ersten Verbindungsschenkel (32) und einen zweiten Verbindungsschenkel (33) zur Verbindung der herabhängenden Arme (19, 19) umfasst,
wobei das erste Joch (14) dahingehend betätigbar ist, das erste Paar Bremsbacken in einer ersten axialen Richtung zu drücken, wobei das zweite Joch (15) dahingehend betätigbar ist, das zweite Paar Bremsbacken in einer zweiten, entgegengesetzten axialen Richtung zu drücken, und sich der erste Schenkel und der zweite Schenkel im Wesentlichen in der gleichen Ebene bewegen,
**dadurch gekennzeichnet, dass**
sich die Joche (14, 15) so überlappen, dass der erste herabhängende Arm (18) des zweiten Jochs unter den Verbindungsschenkeln (30, 31) des ersten Jochs positioniert ist und der zweite herabhängende Arm (17) des ersten Jochs unter den Verbindungsschenkeln (32, 33) des zweiten Jochs positioniert ist.

2. Sattel nach Anspruch 1, wobei der Aktuator (27) direkt auf jedes Joch einwirkt.

3. Sattel nach Anspruch 2, wobei der Aktuator (27) auf jedes Joch in einer gemeinsamen Ebene einwirkt.

4. Sattel nach einem vorhergehenden Anspruch, wobei der Aktuator (27) bezüglich des Körpers schwimmt.

5. Sattel nach einem vorhergehenden Anspruch, wobei sich der Aktuator (27) einwärts des Scheibenpaars befindet.

6. Sattel nach einem vorhergehenden Anspruch, wobei die Joche "U"-förmige Glieder enthalten, die eine Öffnung dazwischen definieren, wobei der Aktuator in der Öffnung vorgesehen ist und dahingehend betätigbar ist, die Glieder auseinander zu drücken.

7. Sattel nach Anspruch 6, wobei der Aktuator (27) ein Nocken ist, der um eine senkrecht zu der ersten und zweiten axialen Richtung verlaufende Achse schwenkbar ist.

8. Sattel nach einem vorhergehenden Anspruch, wobei die Ausbildungen zur Aufnahme des ersten Paars Bremsbacken und die Ausbildungen zur Aufnahme des zweiten Paars Bremsbacken in der ersten axialen Richtung auf einer ersten Seite des Aktuators (27) angebracht sind.

9. Sattel nach einem vorhergehenden Anspruch, der weiterhin eine Bremsbacke umfasst, die in mindestens einer der Ausbildungen zur Aufnahme eines Paars Bremsbacken angebracht ist.

10. Doppelscheibenbremse mit Doppelscheiben mit einer relativ festgelegten axialen Position und Sattel nach einem vorhergehenden Anspruch, der die Scheiben überspreizt.

## Revendications

1. Etrier pour un frein à disque à double rotor, ledit étrier comprenant :
un corps relativement fixe (10),
une première chape (14) déplaçable axialement par rapport au corps, ladite première chape ayant un premier bras dépendant (16) et un deuxième bras dépendant (17) comprenant des formations permettant de recevoir une première paire de plaquettes de frein (21, 23) à appliquer contre les côtés du rotor, la première chape comprenant en outre une première branche de connexion (30) et
une deuxième branche de connexion (31) connectant les bras dépendants (16, 17),
ledit étrier comprenant en outre une deuxième chape (15) déplaçable axialement par rapport au corps (10), ladite deuxième chape ayant un premier bras dépendant (18) et un deuxième bras dépendant (19) comprenant des formations pour recevoir une deuxième paire de plaquettes de frein (22, 24) à appliquer contre les côtés du rotor, la deuxième chape comprenant en outre une première branche de connexion (32) et une deuxième branche de connexion (33) connectant les bras dépendants (18, 19),
la première chape (14) pouvant fonctionner de manière à pousser la première paire de plaquettes de frein dans une première direction axiale, la deuxième chape (15) pouvant fonctionner de manière à déplacer la deuxième paire de plaquettes de frein dans une deuxième direction axiale opposée et la première branche et la deuxième branche se déplaçant substantiellement dans le même plan,
**caractérisé en ce que** :
lesdites chapes (14, 15) se chevauchent de telle sorte que le premier bras dépendant (18) de la deuxième chape soit positionné sous les branches de connexion (30, 31) de la première chape et que le deuxième bras dépendant (17) de la première chape soit positionné sous les branches de connexion (32, 33) de la deuxième chape.

2. Etrier selon la revendication 1, dans lequel ledit actionneur (27) agit directement sur chaque chape.

3. Etrier selon la revendication 2, dans lequel ledit actionneur (27) agit sur chaque chape dans un plan commun.

4. Etrier selon l'une quelconque des revendications précédentes, dans lequel ledit actionneur (27) flotte par rapport au corps.

5. Etrier selon l'une quelconque des revendications précédentes, dans lequel ledit actionneur (27) est incorporé à l'intérieur de la paire de rotors.

6. Etrier selon l'une quelconque des revendications précédentes, dans lequel lesdites chapes incluent des organes en forme de U définissant une ouverture entre elles, l'actionneur étant prévu dans ladite ouverture et pouvant fonctionner de manière à écarter les organes l'un de l'autre.

7. Etrier selon la revendication 6, dans lequel ledit actionneur (27) est une came pouvant pivoter autour d'un axe perpendiculaire aux première et deuxième directions axiales.

8. Etrier selon l'une quelconque des revendications précédentes, dans lequel les formations pour recevoir la première paire de plaquettes de frein et les formations pour recevoir la deuxième paire de plaquettes de frein sont fixées sur un premier côté de l'actionneur (27) dans la première direction axiale.

9. Etrier selon l'une quelconque des revendications précédentes, comprenant en outre une plaquette de frein montée dans au moins l'une des formations pour recevoir une paire de plaquettes de frein.

10. Frein à disque à double rotor comprenant des rotors doubles ayant un emplacement axial relativement fixe et un étrier selon l'une quelconque des revendications précédentes chevauchant lesdits rotors.
